# EUROPÄISCHE PATENTSCHRIFT

(11) **EP 3 500 770 B1**
(45) Veröffentlichungstag und Bekanntmachung des Hinweises auf die Patenterteilung: **05.10.2022**
(21) Anmeldenummer: 17728878.4
(22) Anmeldetag: 12.06.2017
(51) Int. Cl.: F16F 9/04, B29D 22/02, C08K 3/26, C08K 3/34

(54) **ARTIKEL, INSBESONDERE EIN LUFTFEDERBALG, EIN METALL-GUMMI-ELEMENT ODER EIN SCHWINGUNGSDÄMPFER**
ARTICLE, PARTICULARLY AN AIR SPRING BELLOWS, A METAL-RUBBER ELEMENT, OR A VIBRATION DAMPER
ARTICLE, NOTAMMENT SOUFFLET À AIR, ÉLÉMENT EN MÉTAL-CAOUTCHOUC, OU AMORTISSEUR DE VIBRATIONS

(30) Priorität: 17.08.2016 DE 102016215333
(43) Veröffentlichungstag der Anmeldung: 26.06.2019
(73) Patentinhaber: ContiTech Luftfedersysteme GmbH, 30165 Hannover (DE)
(72) Erfinder: LINDENBERG, Mark, 30826 Garbsen (DE); ZANDER, Christoph, 22927 Grosshansdorf (DE); LEETHAUS, Thorsten, 37632 Eschershausen (DE); PASSON-WESSELOH, Barbara, 37073 Göttingen (DE); HAAKE, Anne, 30159 Hannover (DE)
(74) Vertreter: Continental Corporation
(86) Internationale Anmeldenummer: PCT/EP2017/064269
(87) Internationale Veröffentlichungsnummer: WO 2018/033267

(56) Entgegenhaltungen:
- EP-B1- 2 805 812
- JP-A- H09 104 859
- JP-A- H09 132 677
- JP-A- H10 139 828
- JP-A- 2003 160 695
- JP-A- 2004 314 838

## Beschreibung

Die Erfindung betrifft einen Artikel mit einem ein- oder mehrschichtigen Grundkörper mit elastischen Eigenschaften, insbesondere einen Luftfederbalg, ein Metall-Gummi-Element oder einen Schwingungsdämpfer.

Artikel mit elastischen Eigenschaften, die zur Federung bspw. von Kraftfahrzeugen oder Schienenfahrzeugen eingesetzt werden und / oder der Schwingungsdämpfung dienen, werden unter Verwendung elastomerer Mischungen, auch als Kautschukmischungen bezeichnet, hergestellt. Diese, für die grundlegenden Eigenschaften solcher Artikel üblicherweise verwendeten elastomeren Mischungen sind hinreichend bekannt. Artikel mit herausragenden elastischen Eigenschaften, wie bspw. Metall-Gummi Elemente oder Schwingungsdämpfer, enthalten vorzugsweise vulkanisierte Kautschukmischungen, die überwiegend auf Naturkautschuk (NR) und / oder Polyisoprenkautschuk (IR) basieren. Artikel mit einer sehr guten Witterungs-, Mineralöl- und Wärmebeständigkeit, wie bspw. Luftfederbälge, enthalten vorzugsweise vulkanisierte Kautschukmischungen, die überwiegend auf Chloroprenkautschuk (CR) basieren.

Allerdings zeigen Artikel mit diesen elastomeren Mischungen deutliche Nachteile im Brandverhalten. Im Brandfall entstehen unter anderem dichte Rauchgase. Beim Verbrennungsprozess der genannten elastomeren Mischungen, die überwiegend auf NR und / oder IR basieren, ist die Wärmefreisetzungsrate besonders hoch. Beim Verbrennungsprozess der elastomeren Mischungen, die überwiegend auf CR basieren, ist das entstehende Rauchgas für Mensch und Tier toxisch.

Aufgrund der in den letzten Jahren gestiegenen Anforderungen hinsichtlich des Brandschutzes, welche sich vor allem in der verschärften Brandschutznorm EN45545 zeigt, ergibt sich ein erhöhter Bedarf an brandschutzoptimierten Polymerartikeln. Diesen Brandschutzanforderungen können sowohl die genannten elastomeren Mischungen, die überwiegend auf NR und / oder IR basieren, vor allem aufgrund der geforderten maximalen Wärmefreisetzungsrate, als auch die flammwidrigen elastomeren Mischungen, die überwiegend auf CR basieren, insbesondere aufgrund der geforderten Rauchgastoxizität, nicht mehr gerecht werden. Somit erfüllen die Artikel, welche diese elastomeren Mischungen enthalten, die verschärften Anforderungen zumeist nicht mehr. Eine übliche Methode das Brandverhalten von Kautschukmischungen zu verbessern, ist das direkte Einmischen von brandhemmenden Substanzen. Allerdings führt diese Maßnahme bei den betroffenen Mischungen in der Regel dazu, dass sich die physikalischen Eigenschaften verschlechtern. Am betroffenen Artikeln zeigt sich das insbesondere daran, dass sich die Federungs-, Setz- bzw. Schwingungseigenschaften signifikant verschlechtern.

EP 2 805 812 B1 offenbart die Präambel des Anspruchs 1.

Die Aufgabe der Erfindung besteht nun darin, einen Artikel bereitzustellen, der sich durch ein optimiertes Brandschutzverhalten auszeichnet, um die verschärften Anforderungen, insbesondere die in EN-45545 beschriebenen, zu erfüllen. Gleichzeitig sollen die notwendigen physikalischen Eigenschaften des Artikels auf einem vergleichbaren Niveau verbleiben und die Komplexität im Herstellprozess nicht nennenswert erhöht werden. Gelöst wird diese Aufgabe dadurch, dass der Artikel einen ein- oder mehrschichtigen Grundkörper mit elastischen Eigenschaften besitzt, wobei wenigstens eine Schicht D des Grundkörpers aus einer Kautschukmischung aufgebaut ist, die frei von halogenhaltigen Flammschutzmitteln ist und Hydrotalcit und Sepiolith enthält.

Überraschenderweise hat sich gezeigt, dass der Einsatz von Hydrotalcit und Sepiolith in Kautschukmischungen und in Artikeln, die wenigstens eine derartige Kautschukmischung enthalten, eine ausreichende, insbesondere in Verbindung mit chlorsulfoniertem Polyethylen (CSM) und / oder alkyliertem chlorsulfonierten Polyethylen (ACSM) eine verbesserte Flammschutzwirkung, zeigt.

Hydrotalcit wird oft auch als Hydrotalkit, früher auch als Völknerit, bezeichnet. Es hat die chemische Zusammensetzung Mg₆Al₂[(OH)₁₆|CO₃]·4H₂O. Hydrotalcit besitzt die Fähigkeit, durch graduelle Abgabe von Aluminiumhydroxid Säuren zu binden und findet deshalb vor allem vielfältigen Einsatz als Arzneimittel.

Sepiolith ist allgemein auch als Meerschaum bekannt. Es handelt sich um ein Magnesiumsilikat mit der chemischen Zusammensetzung Mg₈[(OH)₂|Si₆O₁₅]₂·(4+8)H₂O. In der Gesamtkautschukmischung beträgt die Menge an Hydrotalcit bevorzugt 5 bis 20 phr, ganz besonders bevorzugt 6 bis 16 phr. Der Sepiolith wird in der Gesamtkautschukmischung bevorzugt in Mengen von 4 bis 20 phr, bevorzugt in Mengen von 8 bis 19 phr, verwendet.

In einer bevorzugten Ausführungsform ist die Kautschukmischung der Schicht D frei von weiteren Flammschutzmitteln.

Es ist aber auch möglich, dass in der Schicht D neben Hydrotalcit und Sepiolith noch wenigstens ein weiteres Flammschutzmittel zu verwenden. In diesem Fall beträgt die Gesamtmenge an Hydrotalcit und Sepiolith bezogen auf die Gesamtmenge an Flammschutzmitteln wenigstens 12 Gew.-%, bevorzugt wenigstens 17 Gew.-%.

Die Kautschukmischung der Schicht D enthält wenigstens eine Kautschukkomponente, die bevorzugt ausgewählt ist aus der Gruppe, bestehend aus Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Chloropren-Kautschuk (CR) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder alkyliertes chlorsulfoniertes Polyethylen (ACSM) und / oder Polyepichlorhydrinkautschuke (CO ; ECO ; ETER) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Poyurethan (PU).

Die genannten Kautschuke können hierbei alleine oder im Verschnitt eingesetzt werden. Besonders bevorzugt ist die Verwendung von Chlorsulfoniertem Polyethylen (CSM) und / oder alkyliertem chlorsulfoniertem Polyethylen (ASCM) jeweils alleine oder in Kombination.

Enthält die Kautschukmischung der Schicht D CSM und / oder ACSM als Hauptkautschukkomponente, d.h. mehr als 50 phr, so zeigen sich die Vorteile von Sepiolith und Hydrotalcit hinsichtlich der flammhemmenden Eigenschaften besonders gut. Die Menge an CSM und / oder ACSM beträgt bevorzugt 80 bis 100 phr, besonders bevorzugt 90 bis 100 phr.

Der Grundkörper kann entweder nur aus der Schicht D aufgebaut sein oder aber wenigstens eine weitere Schicht enthalten.

Sind weitere Schichten vorhanden, so bildet die Schicht D bevorzugt die äußerste nach außen weisende Schicht des Artikels.

Möglich ist aber auch, dass die Schicht D sich zwischen weiteren Schichten eingebettet ist.

Handelt es sich bei der Schicht D um die äußerste Schicht oder ist die Schicht D zwischen weiteren Schichten eingebettet, so ist es in einer bevorzugten Ausführungsform möglich, dass die Schicht D den Grundkörper nicht vollständig umfasst, sondern lediglich teilweise vorhanden ist, vor allem an den Stellen, die hinsichtlich der Brandgefahr besonders exponiert sind.

So kann zum Beispiel eine weitere Schicht A vorhanden sein, welche die so genannte "Innenkappe" bildet und die aus einer Elastomermischung aufgebaut ist und besonders gute elastische Eigenschaften besitzt. Die Elastomermischung ist eine vulkanisierbare, bevorzugt thermoplastfreie, Kautschukmischung, enthaltend wenigstens eine Kautschukkomponente sowie weitere Mischungsingredienzien. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR) Bromiertes Copolymer aus Isobutylen und Paramethylstyrol (BIMS), Butadien-Kautschuk (BR)Chloriertes Polyethylen (CM), Chlorsulfoniertes Polyethylen (CSM), Alkyliertes Chlorsulfoniertes Polyethylen (ACSM), Polyepichlorhydrinkautschuke (CO; ECO; ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU).

Die vorgenannten Kautschuktypen können unverschnitten sein. Auch der Einsatz eines Verschnittes ist möglich.

Welcher Kautschuktyp bevorzugt wird, hängt von der Artikelart und der Anforderung an den einzelnen Artikel ab. Die üblichen Mischungsingredienzien umfassen wenigstens einen Vernetzer oder ein Vernetzersystem (Vernetzungsmittel und Beschleuniger). Zusätzliche Mischungsingredienzien sind zumeist wenigstens noch ein Füllstoff und/oder wenigstens ein Verarbeitungshilfsmittel und/oder wenigstens einen Weichmacher, wie bspw. Phosphorsäureesterweichmacher, und/oder wenigstens ein Alterungsschutzmittel sowie gegebenenfalls weitere Zusatzstoffe (z.B. Farbpigmente, Verstärkungsfasern. Diesbezüglich wird auf den allgemeinen Stand der Kautschukmischungstechnologie verwiesen.

Des Weiteren kann in einer besonderen Ausführungsform wenigstens eine Schicht B vorhanden, die aus wenigstens einem Festigkeitsträger gebildet wird. Bevorzugt handelt es sich hierbei um ein Cordgewebe aus einer oder mehreren Lagen, bevorzugt aus zwei Lagen, die eine gute Haftung zur Schicht A aufweisen. In einer ganz besonders bevorzugten Ausführungsform handelt es sich hierbei um ein Bistretch-Gewebe, wie es bspw. in WO 2016045813 A1 beschrieben wird.

Als Materialien für die Schicht B können alle bekannten synthetischen und natürlichen Materialien alleine oder in Kombination, d.h. als Hybridgewebe, verwendet werden.

Als synthetische Materialien kommen insbesondere synthetische Polymere, wie bspw.

Acrylnitril, Polyacrylnitril, Polypropylen, Polyester, Polyamid, Polyurethan, Polyphenylensulfid, Polyoxadiazol, Aramide, wie p-Aramid, m-Aramid oder co-poly para Aramid, Polyimid, Polyetherimid, Polyetheretherketon, Polyethylen-2,6-naphthalat, Polyphenylen, Polyphenylenoxid, Polyphenylensulfid, Polyphenylenether, Polybenzoxazole, Polyvinylalkohol in Frage.

Bei den natürlichen Materialien kann es sich um Steinwolle oder Asbest oder um Baumwolle, Flachs oder Hanf, oder um Wolle oder Seide, handeln.

Anorganische Materialien wie Glas, Keramik, Kohlenstoff (Carbon), Metall, wie bspw. Stahl, oder Gestein, wie bspw. Basalt, sind ebenso denkbar.

Vorzugsweise handelt es sich um Polyamid, insbesondere PA6.6, oder Polyester alleine oder in Kombination.

Zur Erzielung einer ausreichenden Konfektionsklebrigkeit während des Herstellprozesses des Artikels kann das Cordgewebe einseitig oder beidseitig gummiert bzw. friktioniert sein. Zur Gummierung kann bevorzugt entweder eine Zusammensetzung verwendet werden, die quantitativ und / oder qualitativ gleich der Zusammensetzung für die Schicht C oder quantitativ und / oder qualitativ gleich der Zusammensetzung für die Schicht A ist. Dies führt zu einer weiteren Erniedrigung der Komplexität im Herstellprozess und schafft einen dynamisch tauglichen Haftungsverbund.

In einer weiteren bevorzugten Ausführungsform kann der Artikel noch wenigstens eine zusätzliche Schicht C enthalten.

Die Schicht C bildet dann die so genannte "Außenkappe" des Artikels. Die Schicht C kann einlagig oder zweilagig ausgebildet. Die Elastomermischung der Schicht C ist eine vulkanisierbare, bevorzugt thermoplastfreie, Kautschukmischung, enthaltend wenigstens eine Kautschukkomponente sowie weitere Mischungsingredienzien. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR) Bromiertes Copolymer aus Isobutylen und Paramethylstyrol (BIMS), Butadien-Kautschuk (BR) Chloriertes Polyethylen (CM), Chlorsulfoniertes Polyethylen (CSM), Alkyliertes Chlorsulfoniertes Polyethylen (ACSM), ), Polyepichlorhydrinkautschuke (CO; ECO; ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU).

Die vorgenannten Kautschuktypen können unverschnitten sein. Auch der Einsatz eines Verschnittes ist möglich.

Welcher Kautschuktyp bevorzugt wird, hängt von der Artikelart ab. Die üblichen Mischungsingredienzien umfassen wenigstens einen Vernetzer oder ein Vernetzersystem (Vernetzungsmittel und Beschleuniger). Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Haftvermittler, Flammschutzmittel, Verstärkungsfasern.

Diesbezüglich wird auf den allgemeinen Stand der Kautschukmischungstechnologie verwiesen.

Es ist auch möglich, dass der Artikel noch wenigstens eine weitere Schicht E ist auf der Basis wenigstens eines Thermoplasts enthält. Als Thermoplaste können zum Beispiel Polyolefin, insbesondere Polyethylen (PE), wie LD-PE, LLD-PE, UHMW-PE, oder Polypropylen (PP), Polystyrol (PS), Polyamid (PA), beispielsweise PA6 oder PA6.6, Polyester, beispielsweise PET, PEN oder PBT verwendet werden. Die Schicht E ist in einer bevorzugten Ausführungsform als Folie ausgebildet. Besonders gut geeignet hat sich die Verwendung von PE-Folie, da diese insbesondere bei peroxidisch vernetzenden Elastomermischungen einen besonders guten Haftungsverbund bildet und somit ggf. auf weitere Haftvermittler verzichtet werden kann. Je nach Art des Artikels und nach Art der weiteren Schichten ist die Schicht E besonders gut haftungssteigernd. Sie kann auf den Artikelrohling mit Hilfe eines Wärmestrahlers und Druck aufgebracht werden.

Bei dem Artikel handelt es sich bevorzugt um einen Luftfederbalg, um ein Metall-Gummi-Element, einen Schwingungsdämpfer oder um ein Dämpfungselement eines Lagers, einer Buchse oder einer Schichtfeder oder Konusfeder. Der Artikel kann aber auch ein schlauchförmiger Körper sein. Schlauchförmige Körper sind bspw. Förderschläuche aller Art, Luftfederbälge (Kreuzlagenbälge, Axialbälge) und Kompensatoren in verschieden Ausführungen (z.B. Torsionskompensator, Lateralkompensator). Ebenso kann der Artikel ein Antriebsriemen sein.

Die Erfindung wird nun anhand von Ausführungsbeispielen unter Bezugnahme auf schematische Zeichnungen erläutert. Es zeigen:

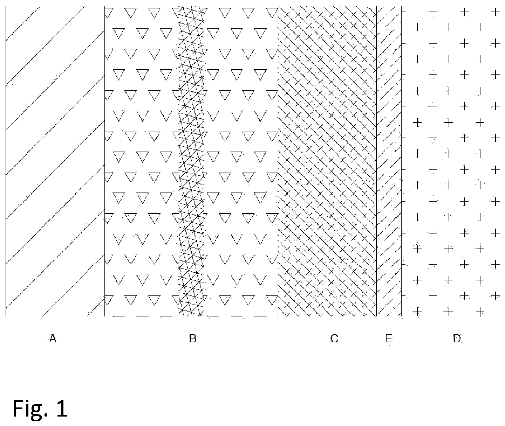

Fig. 1 zeigt einen beispielhaften Schichtenaufbau eines Artikels, bevorzugt einer Luftfeder, eines Schwingungsdämpfers oder eines Dämpfungselementes. Die Schicht C, welche frei von halogenhaltigen Flammschutzmitteln ist und Hydrotalcit und Sepiolith enthält, befindet sich hierbei auf der nach außen weisenden Seite des Artikels. Zusätzlich enthält der Artikel noch eine Innenkappe A, eine Außenkappe C, eine beidseitig gummierte Festigkeitsträgerlage B und eine Folienschicht E.

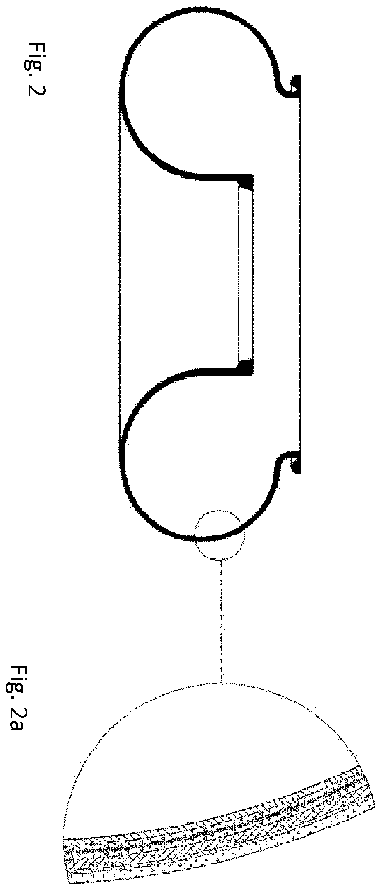

Fig.2 zeigt einen Schnitt durch einen Schwingungsdämpfer. Der Ausschnitt in dem Kreis von Fig. 2 wird in Figur 2a näher dargestellt. In Fig. 2a findet sich der gleiche Schichtenaufbau wie für Fig. 1 beschrieben wieder.

## Patentansprüche

1. Artikel mit einem ein- oder mehrschichtigen Grundkörper mit elastischen Eigenschaften, wobei wenigstens eine Schicht D des Grundkörpers aus einer Kautschukmischung aufgebaut ist, die frei von halogenhaltigen Flammschutzmitteln ist und mehr als 50 phr Chlorsulfoniertes Polyethylen (CSM) und / oder alkyliertes chlorsulfoniertes Polyethylen (ASCM) jeweils alleine oder in Kombination enthält, und **dadurch gekennzeichnet, dass** die Kautschukmischung zusätzlich Hydrotalcit und Sepiolith enthält.

2. Artikel nach Anspruch 1, **dadurch gekennzeichnet, dass** die Menge an Hydrotalcit in der Schicht D 5 bis 20 phr beträgt.

3. Artikel nach Anspruch 1 oder 2, **dadurch gekennzeichnet, dass** die Menge an Sepiolith in der Schicht D 4 bis 20 phr beträgt.

4. Artikel nach einem der Ansprüche 1 bis 3, **dadurch gekennzeichnet, dass** es sich um einen Luftfederbalg, ein Metall-Gummi-Element, einen Schwingungsdämpfer, ein Dämpfungselement eines Lagers, einer Buchse oder einer Schichtfeder oder Konusfeder, einen schlauchförmigen Körper oder um einen Antriebsriemen handelt.

## Claims

1. Article having a single-layer or multi-layer main body with elastic properties, where at least one layer D of the main body is composed of a rubber mixture which is free from halogen-containing flame retardants and comprises more than 50 phr of chlorosulfonated polyethylene (CSM) and/or alkylated chlorosulfonated polyethylene (ASCM), in each case alone or in combination, and **characterized in that** the rubber mixture further comprises hydrotalcite and sepiolite.

2. Article according to Claim 1, **characterized in that** the amount of hydrotalcite in the layer D is 5 to 20 phr.

3. Article according to Claim 1 or 2, **characterized in that** the amount of sepiolite in the layer D is 4 to 20 phr.

4. Article according to any of Claims 1 to 3, **characterized in that** it is an air spring bellows, a metal-rubber element, a vibration damper, a damping element of a bearing, bushing or multi-layered spring or conical spring, a tubular body or a drive belt.

## Revendications

1. Article comprenant un corps de base mono- ou multicouche ayant des propriétés élastiques, au moins une couche D du corps de base étant constituée d'un mélange de caoutchouc qui est exempt d'agents ignifuges halogénés et contient plus de 50 pce de polyéthylène chlorosulfoné (CSM) et/ou de polyéthylène chlorosulfoné alkylé (ASCM), respectivement seuls ou en combinaison, et **caractérisé en ce que** le mélange de caoutchouc contient en outre de l'hydrotalcite et de la sépiolite.

2. Article selon la revendication 1, **caractérisé en ce que** la quantité d'hydrotalcite dans la couche D est de 5 à 20 pce.

3. Article selon la revendication 1 ou 2, **caractérisé en ce que** la quantité de sépiolite dans la couche D est de 4 à 20 pce.

4. Article selon l'une quelconque des revendications 1 à 3, **caractérisé en ce que** celui-ci est un soufflet de suspension pneumatique, un élément métal-gomme, un amortisseur de vibrations, un élément d'amortissement d'un palier, d'une douille ou d'un ressort stratifié ou ressort conique, un corps en forme de tuyau ou une courroie de transmission.
